# EUROPEAN PATENT SPECIFICATION

(11) **EP 4 328 419 B1**
(45) Date of publication and mention of the grant of the patent: **15.10.2025**
(21) Application number: 23192241.0
(22) Date of filing: 18.08.2023
(51) Int. Cl.: F01D 9/06, F01D 25/30, F02K 1/04, F01D 9/04, F01D 25/16, F02C 9/18, F02K 3/06

(54) **EXHAUST ASSEMBLY FOR PURGING A NACELLE CAVITY OF A PROPULSION SYSTEM**
ABGASANORDNUNG ZUR SPÜLUNG EINER GONDELHÖHLE EINES ANTRIEBSSYSTEMS
ENSEMBLE D'ÉCHAPPEMENT POUR PURGER UNE CAVITÉ DE NACELLE D'UN SYSTÈME DE PROPULSION

(30) Priority: 19.08.2022 US 202217891740
(43) Date of publication of application: 28.02.2024
(73) Proprietor: PRATT & WHITNEY CANADA CORP., Longueuil, Québec J4G 1A1 (CA)
(72) Inventor: GOVER, Christopher J., (01BE5) Longueuil, J4G 1A1 (CA)
(74) Representative: Dehns

(56) References cited:
- US-A- 4 989 406
- US-A- 5 020 318
- US-A- 5 272 869
- US-A1- 2007 217 911
- US-A1- 2015 345 400
- US-A1- 2019 242 264

## Description

### TECHNICAL FIELD

This invention relates generally to aircraft propulsion systems and, more particularly, to assemblies for purging a nacelle cavity of an aircraft propulsion system.

### BACKGROUND OF THE ART

A propulsion system for an aircraft may include a propulsion assembly (e.g., a gas turbine engine) which is enclosed by a nacelle. During operation of the propulsion system, contaminants and high-temperature gas may be present within a nacelle cavity located between the propulsion assembly and the nacelle. Various systems and methods are known in the art for reducing the impact of contaminants and high-temperature gas within a nacelle cavity. While these known systems and methods have various advantages, there is still room in the art for improvement. US2007/217911A1, US4989406A, US5272869A, US2015/345400A1, US5020318A and US2019/242264A1 disclose arrangements of the prior art.

### SUMMARY

It should be understood that any or all of the features or embodiments described herein can be used or combined in any combination with each and every other feature or embodiment described herein unless expressly noted otherwise.

According to an aspect of the invention, a propulsion system is provided according to claim 1.

In any of the aspects or embodiments described above and herein, the centerbody may include an opening at a downstream end of the centerbody.

In any of the aspects or embodiments described above and herein, the inner exhaust case may form an inner cavity, the inner cavity may be located radially inward of the inner exhaust case, and the outlet may be located at the inner radial end.

In any of the aspects or embodiments described above and herein, the outlet may include a plurality of outlet apertures and the plurality of outlet apertures may be located in the strut body between the outer radial end and the inner radial end.

In any of the aspects or embodiments described above and herein, the strut body may extend between a leading edge and a trailing edge and the plurality of outlet apertures may be located at the trailing edge.

In any of the aspects or embodiments described above and herein, the propulsion system may be configured as a turboprop gas turbine engine.

In any of the aspects or embodiments described above and herein, the plurality of hollow struts may be located downstream of the turbine section with respect to the core flow path.

In any of the aspects or embodiments described above and herein, the propulsion assembly may further include an auxiliary assembly extending through the internal passage of at least one hollow strut of the plurality of hollow struts.

In any of the aspects or embodiments described above and herein, the auxiliary assembly may be a bearing system and the bearing system may include a lubricant conduit extending through the internal passage of the at least one hollow strut of the plurality of hollow struts.

In any of the aspects or embodiments described above and herein, the nacelle cavity may be located radially outside of the propulsion assembly.

In any of the aspects or embodiments described above and herein, the strut body may extend between a leading edge of the strut and a trailing edge of the strut and the outlet may be located at the trailing edge.

In any of the aspects or embodiments described above and herein, the outlet may include a plurality of outlet apertures.

In any of the aspects or embodiments described above and herein, the plurality of outlet apertures may be configured as a radial arrangement of outlet apertures.

In any of the aspects or embodiments described above and herein, the inner exhaust case may form an inner cavity, the inner cavity may be located radially inward of the inner exhaust case, and the outlet may further be in fluid communication with the inner cavity at the inner radial end.

In any of the aspects or embodiments described above and herein, the inner exhaust case may form a centerbody and the centerbody may include an opening at a downstream end of the centerbody.

In any of the aspects or embodiments described above and herein, the opening may be centered about the axial centerline.

The present invention and all its aspects, embodiments and advantages associated therewith will become more readily apparent in view of the detailed description provided below, including the accompanying drawings.

### DESCRIPTION OF THE DRAWINGS

FIG. 1 illustrates a schematic view of a gas turbine engine.
FIG. 2 illustrates a side, cutaway view of a portion of an exhaust section for the gas turbine engine of FIG. 1.
FIG. 3 illustrates an aft, cutaway view of a portion of the exhaust section of FIG. 2.
FIG. 4 illustrates a side, cutaway view of a portion of an exhaust section for the gas turbine engine of FIG. 1.
FIG. 5 illustrates an aft, cutaway view of a portion of the exhaust section of FIG. 4.
FIG. 6 illustrates an aft, cutaway view of a portion of another exhaust section.
FIG. 7 illustrates an aft, cutaway view of a portion of another exhaust section.

### DETAILED DESCRIPTION

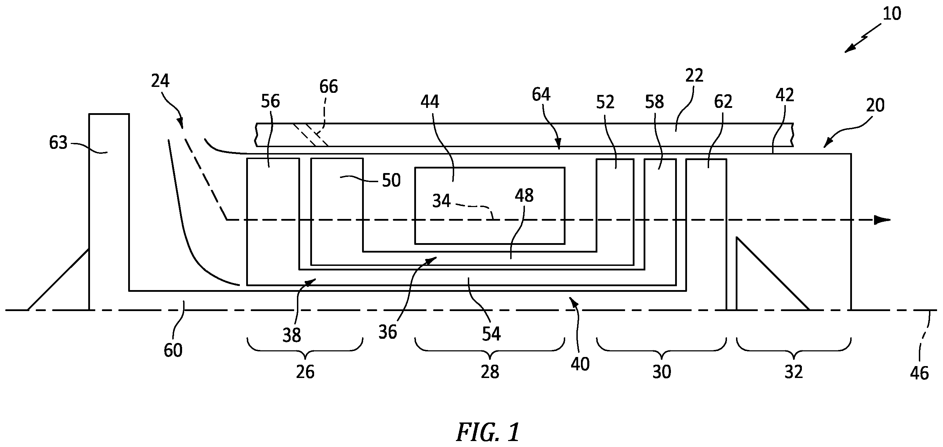

FIG. 1 schematically illustrates a propulsion system 10 for an aircraft. The propulsion system 10 of FIG. 1 includes a propulsion assembly 20 and nacelle 22 (e.g., an enclosure). The propulsion assembly 20 of FIG. 1 is configured as a multi-spool turboprop engine. However, while the following description and accompanying drawings may refer to the turboprop gas turbine engine of FIG. 1 as an example, it should be understood that aspects of the present disclosure may be equally applicable to other types of gas turbine engines including, but not limited to, a turboshaft gas turbine engine, a turbofan gas turbine engine, a turbojet gas turbine engine, a propfan gas turbine engine, or an open rotor gas turbine engine. The propulsion assembly 20 of FIG. 1 is configured to drive (e.g., apply a rotational force to) a propeller (not shown). The propulsion system 10 and/or the propulsion assembly 20 of FIG. 1 includes an air inlet 24, a compressor section 26, a combustor section 28, a turbine section 30, and an exhaust section 32. The compressor section 26 drives air from the air inlet 24 along a core flow path 34 for compression and communication into the combustor section 28, expansion through the turbine section 30, and exhaust from the propulsion assembly 20 via the exhaust section 32.

The propulsion assembly 20 of FIG. 1 includes a first rotational assembly 36 (e.g., a highpressure spool), a second rotational assembly 38 (e.g., an intermediate-pressure spool), a third-rotational assembly 40 (e.g., a low-pressure spool and/or power spool), an engine static structure 42 (e.g., an engine case, an exhaust case, etc.), and an annular combustor 44. It should be understood that "low pressure," "intermediate pressure," and "high pressure" or variations thereof as used herein are relative terms indicating that the high pressure is greater than the intermediate pressure and the intermediate pressure is greater than the low pressure. The first rotational assembly 36, the second rotational assembly 38, and the third rotational assembly 40 of FIG. 1 are mounted for rotation about an axial centerline 46 (e.g., a rotational axis) of the propulsion assembly 20 relative to the engine static structure 42. In some embodiments, the first rotational assembly 36, the second rotational assembly 38, and/or the third rotational assembly 40 may alternatively be configured for rotation about a rotational axis which is different than the axial centerline 46.

The first rotational assembly 36 includes a first shaft 48, a bladed first compressor rotor 50, and a bladed first turbine rotor 52. The first shaft 48 interconnects the bladed first compressor rotor 50 and the bladed first turbine rotor 52. The second rotational assembly 38 includes a second shaft 54, a bladed second compressor rotor 56, and a bladed second turbine rotor 58. The second shaft 54 interconnects the bladed second compressor rotor 56 and the bladed second turbine rotor 58. The third rotational assembly 40 includes a third shaft 60 and a bladed third turbine rotor 62. The third shaft 60 is connected to the bladed third turbine rotor 62. The third shaft 60 is configured to apply a rotational force (e.g., directly or indirectly) to a propeller (not shown). The combustor 44 is disposed between the bladed first compressor rotor 50 and the bladed first turbine rotor 52 along the core flow path 34.

In operation, airflow along the core flow path 34 is ingested by the air inlet 24, compressed by the bladed second compressor rotor 56 and the bladed first compressor rotor 50, mixed and burned with fuel in the combustor 44, and then expanded across the bladed first turbine rotor 52, the bladed second turbine rotor 58, and the bladed third turbine rotor 62. The bladed first turbine rotor 52, the bladed second turbine rotor 58, and the bladed third turbine rotor 62 rotationally drive the first rotational assembly 36, the second rotational assembly 38, and the third rotational assembly 40, respectively, in response to the expansion of the combustion gases. The first shaft 48, the second shaft 54, and the third shaft 60 of FIG. 1 are concentric and rotate about the axial centerline 46.

The nacelle 22 surrounds the propulsion assembly 20 and forms an exterior portion of the propulsion system 10. The nacelle 22 of FIG. 1 is disposed about (e.g., completely around) the propulsion assembly 20 with respect to the axial centerline 46. The nacelle 22 of FIG. 1 is radially spaced from the propulsion assembly 20 (e.g., from one or more portions of the engine static structure 42) to form a nacelle cavity 64 (e.g., an outer cavity of the exhaust section 32) between the nacelle 22 and the propulsion assembly 20. The nacelle 22 of FIG. 1 includes an air inlet 66. The air inlet 66 may be configured to direct air flow into the nacelle cavity 64 from outside the propulsion system 10. As will be discussed in further detail, air flow through the air inlet 66 may be used to provide cooling to the nacelle cavity 64 and/or to purge contaminants (e.g., fuel vapors) from the nacelle cavity 64 during operation of the propulsion system 10. The air inlet 66 of FIG. 1 is configured as a circumferential arrangement of louvers extending through the nacelle 22. However, the air inlet 66 of the present disclosure is not limited to the configuration illustrated in FIG. 1 and may alternatively be configured with one or more air scoops, apertures, or the like. The nacelle cavity 64 described herein may be understood as a cavity of the propulsion system 10 within which flowing fluid does not substantially contribute to propulsion of the propulsion system 10 (e.g., in contrast to a bypass duct of a turbofan gas turbine engine). The nacelle 22 of FIG. 1 is illustrated as forming an outermost housing of the propulsion system 10, however, the present disclosure is not limited to this particular configuration of the propulsion system 10.

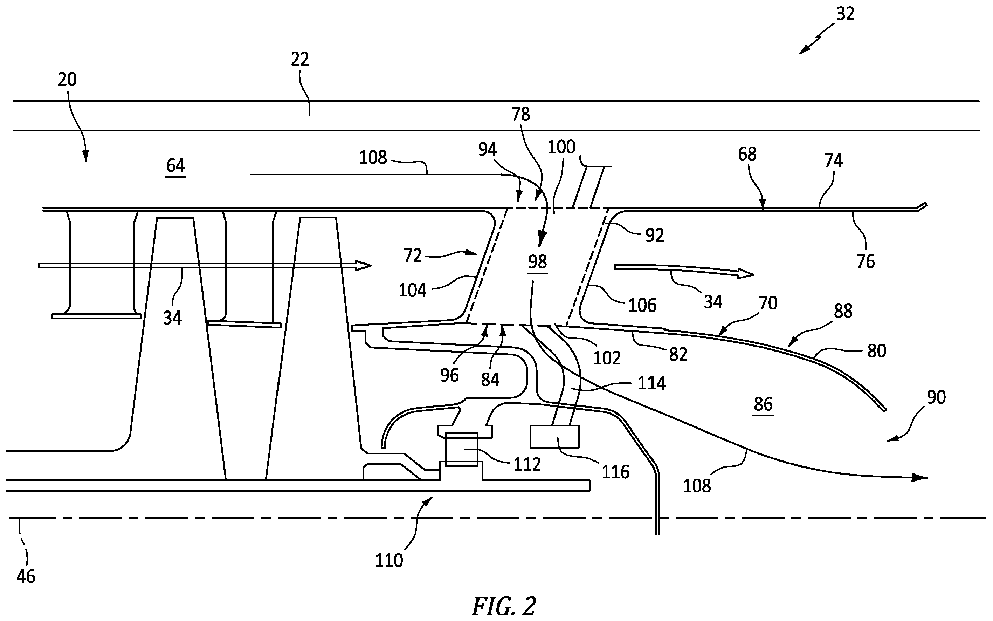

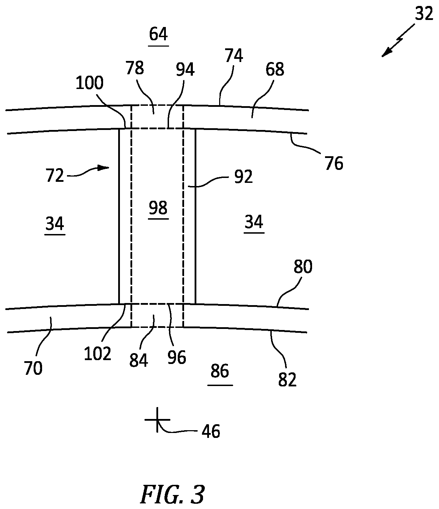

FIGS. 2 and 3 illustrate portions of an embodiment of the exhaust section 32 for the propulsion system 10 of FIG. 1. The exhaust section 32 of FIGS. 2 and 3 includes an outer exhaust case 68, an inner exhaust case 70, and one or more struts 72. Combustion exhaust gas flowing along the core flow path 34 passes through the exhaust section 32 between (e.g., radially between) the outer exhaust case 68 and the inner exhaust case 70.

The outer exhaust case 68 forms a portion (e.g., an annular portion) of the engine static structure 42 (see FIG. 1). The outer exhaust case 68 of FIG. 2 may form a portion of the exterior of the propulsion assembly 20. The outer exhaust case 68 includes an outer radial surface 74, an inner radial surface 76, and one or more inlet apertures 78. The outer radial surface 74 forms, in part, the nacelle cavity 64 (e.g., an inner radial boundary of the nacelle cavity 64). The inner radial surface 76 forms, in part, the core flow path 34 (e.g., an outer radial boundary of the core flow path 34). The inlet apertures 78 extend through the outer exhaust case 68 from the outer radial surface 74 to the inner radial surface 76. The inlet apertures 78 may be configured as a circumferential arrangement of inlet apertures 78 in which the inlet apertures 78 are circumferentially spaced about the axial centerline 46, for example, in a circumferential array. However, the present disclosure is not limited to any particular arrangement of the inlet apertures 78.

The inner exhaust case 70 forms a portion (e.g., an annular portion) of the engine static structure 42 (see FIG. 1). The inner exhaust case 70 includes an outer radial surface 80 and an inner radial surface 82. The inner exhaust case 70 may further include one or more outlet apertures 84. The outer radial surface 80 forms, in part, the core flow path 34 (e.g., an inner radial boundary of the core flow path 34). The inner radial surface 82 forms a portion of an exhaust cavity 86 (e.g., an inner cavity of the exhaust section 32). For example, the inner radial surface 82 may form an outer radial boundary of the exhaust cavity 86. The outlet apertures 84 extend through the inner exhaust case 70 from the outer radial surface 80 to the inner radial surface 82. Like the inlet apertures 78, the outlet apertures 84 may be configured as a circumferential arrangement of outlet apertures 84 in which the outlet apertures 84 are circumferentially spaced about the axial centerline 46, for example, in a circumferential array. However, the present disclosure is not limited to any particular arrangement of the outlet apertures 84.

The inner exhaust case 70 forms or otherwise includes an annular centerbody 88 for the exhaust section 32. The centerbody 88 may form a portion of an exhaust nozzle for the exhaust section 32. The centerbody 88 is disposed circumferentially about (e.g., completely around) the exhaust cavity 86. The centerbody 88 forms or otherwise includes an opening 90 at (e.g., on, adjacent, or proximate) a downstream end (e.g., an axially aft end) of the centerbody 88. The opening 90 of FIG. 2 may be centered about the axial centerline 46. The exhaust cavity 86 is in fluid communication with the exterior of the propulsion system 10 (see FIG. 1) via the opening 90.

Each strut 72 is configured as a hollow strut. Each strut 72 includes a strut body 92, an inlet 94, an outlet 96, and an internal passage 98. The strut body 92 extends between and to an outer radial end 100 of the strut 72 and an inner radial end 102 of the strut 72. The strut body 92 extends between and to a leading edge 104 of the strut 72 and a trailing edge 106 of the strut 72. The leading edge 104 is positioned upstream of the trailing edge 106 with respect to the core flow path 34. The strut body 92 may be configured as an airfoil body between the leading edge 104 and the trailing edge 106. For example, the strut body 92 may include a generally concave-shaped portion (e.g., a pressure side) extending from the leading edge 104 to the trailing edge 106 and the strut body 92 may include a generally convex-shaped portion (e.g., a suction side) extending from the leading edge 104 to the trailing edge 106. The strut body 92 of the present disclosure, however, is not limited to an airfoil configuration. The inlet 94 is located at (e.g., on, adjacent, or proximate) the outer radial end 100. The outlet 96 of the strut 72 of FIGS. 2 and 3 is located at (e.g., on, adjacent, or proximate) the inner radial end 102. The internal passage 98 extends through the strut body 92 from the inlet 94 to the outlet 96.

Each strut 72 connects the outer exhaust case 68 to the inner exhaust case 70 and extends through (e.g., radially through) the core flow path 34. The outer radial end 100 of each strut 72 is connected (e.g., welded or otherwise fixedly mounted) to the outer exhaust case 68. For example, the outer radial end 100 may be connected to the inner radial surface 76. The outer radial end 100 is connected to the outer exhaust case 68 at (e.g., on, adjacent, or proximate) the location of a respective inlet aperture 78, such that the inlet 94 is fluidly coupled with the respective inlet aperture 78. The inner radial end 102 of each strut 72 is connected (e.g., fixedly mounted) to the inner exhaust case 70. For example, the inner radial end 102 may be connected to the outer radial surface 80. The inner radial end 102 of the strut 72 of FIGS. 2 and 3 is connected to the inner exhaust case 70 at (e.g., on, adjacent, or proximate) the location of a respective outlet aperture 84, such that the outlet 96 is fluidly coupled with the respective outlet aperture 84. In some embodiments, the struts 72 may be integrally formed with one or both of the outer exhaust case 68 and the inner exhaust case 70 (e.g., the struts 72 and the outer exhaust case 68 and/or the inner exhaust case 70 may form a unitary component). The struts 72 may be configured as a circumferential arrangement of struts 72 in which the struts 72 are circumferentially spaced about the axial centerline 46. In some embodiments, the exhaust section 32 may include additional struts connecting the outer exhaust case 68 to the inner exhaust case 70, which additional struts may be different than (e.g., non-hollow) the struts 72.

In operation of the propulsion system 10, the internal passage 98 of each strut 72 is configured to convey gas from the nacelle cavity 64 to the exhaust cavity 86. FIG. 2 schematically illustrates an exemplary purge flow path 108 along which gas may flow from the nacelle cavity 64, through each strut 72, into the exhaust cavity 86, and exit the propulsion system 10 (see FIG. 1) via the opening 90. The flow of gas through the exhaust cavity 86 and the opening 90 (e.g., along the purge flow path 108) may cause the formation of a low-pressure region within the exhaust cavity 86 and/or downstream of the opening 90, thereby increasing the flow rate of gas through the nacelle cavity 64, struts 72, and exhaust cavity 86. For example, the gas flowing along the purge flow path 108 may interact with the relatively hotter combustion exhaust gas flowing along the core flow path 34, downstream of the opening 90, thereby forming the low-pressure region within the exhaust cavity 86 and/or downstream of the opening 90. All or substantially all of the gas entering the air inlet 66 (see FIG. 1) passes through the struts 72.

In some embodiments, the struts 72 of FIGS. 2 and 3 may be configured to accommodate one or more auxiliary assemblies of the propulsion system 10 (see FIG. 1). For example, one or more conduits, wires, cables, and the like may extend through the internal passage 98. FIG. 2 illustrates a bearing assembly 110 for rotatably supporting the third shaft 60. The bearing assembly of FIG. 2 includes a bearing 112, a lubricant conduit 114, and a lubricant nozzle 116. The bearing 112 is mounted between the inner exhaust case 70 and the third shaft 60 for rotatably supporting the third shaft 60. The lubricant conduit 114 extends from a lubricant supply (not shown) radially outside the outer exhaust case 68, through the internal passage 98, to the lubricant nozzle 116. The lubricant conduit 114 is configured to supply lubricant to the lubricant nozzle 116 for lubricating and cooling components of the bearing assembly 110 and the third shaft 60. The propulsion system 10 of the present disclosure, of course, is not limited to the foregoing exemplary bearing assembly 110 and other auxiliary assemblies may be implemented in combination with the struts 72 of the present disclosure.

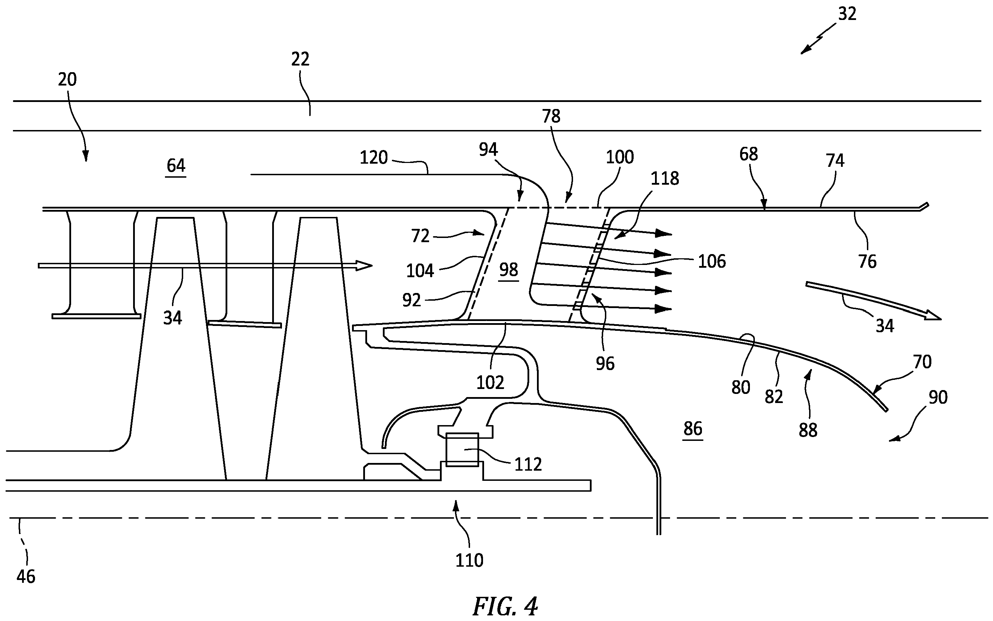

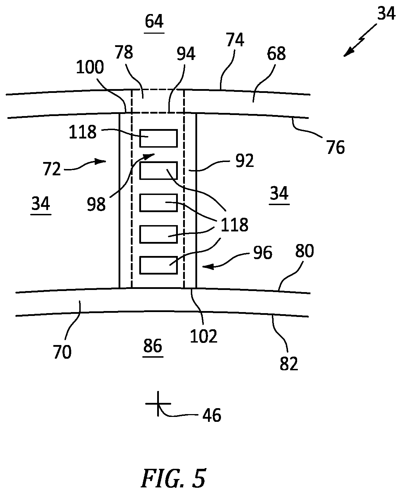

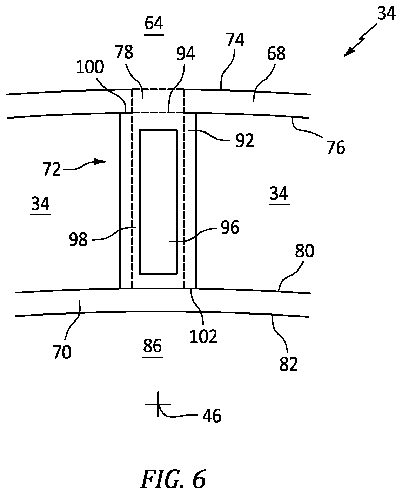

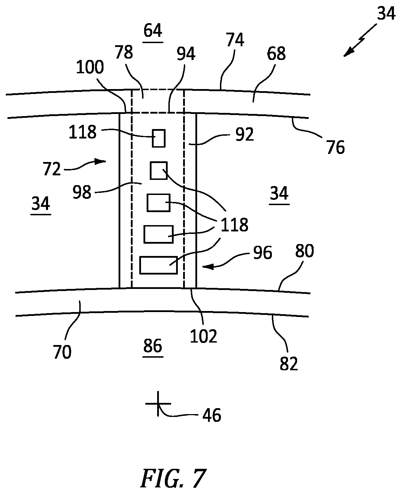

FIGS. 4 and 5 illustrate portions of another embodiment of the exhaust section 32 for propulsion system 10 of FIG. 1. The outlet 96 of FIGS. 4 and 5 is formed through the strut body 92 and located between the outer radial end 100 and the inner radial end 102. For example, the outlet 96 of FIGS. 4 and 5 is located at (e.g., on, adjacent, or proximate) the trailing edge 106. Thus, gas flowing through the internal passage 98 exits the internal passage 98 within the core flow path 34. FIG. 4 schematically illustrates an exemplary purge flow path 120 along which gas may flow from the nacelle cavity 64, through each strut 72, and into the core flow path 34 via the outlet 96. The outlet 96 may include a plurality of outlet apertures 118. The outlet 96 of FIGS. 4 and 5 includes a radial arrangement of the plurality of outlet apertures 118 along the trailing edge 106. The plurality of outlet apertures 118, however, are not limited to the radial arrangement illustrated in FIGS. 4 and 5. FIGS. 6 and 7 illustrate alternative embodiments of the outlet 96 formed through the strut body 92 and located between the outer radial end 100 and the inner radial end 102. For example, the outlet 96 of FIG. 6 includes a single radially-elongated outlet aperture. The plurality of outlet apertures 118 of FIG. 7 includes apertures having different sizes (e.g., different cross-sectional flow areas). For example, the outlet apertures of the plurality of apertures 118 may increase in size in a direction from the outer radial end 100 to the inner radial end 102. In some embodiments, the outlet 96 may additionally be formed through the inner radial end 102 as described above with respect to the strut 72 of FIGS. 2 and 3. The relatively high flow rate of the combustion exhaust gas along the core flow path 34 may facilitate an increased the flow rate of gas (e.g., along the purge flow path 120) through the nacelle cavity 64 and the struts 72, and into the core flow path 34.

The struts 72 of the present disclosure may facilitate improved purge gas flow through the nacelle cavity 64, thereby provide cooling to the nacelle cavity 64 and/or purging contaminants (e.g., fuel vapors) from the nacelle cavity 64 during operation of the propulsion system 10. The continuous flow of gas through the nacelle cavity 64 may provide cooling for interior structures and/or surfaces of the nacelle 22, outer structures and/or surfaces of the propulsion assembly 20, and/or other components or structures of the propulsion system 10 which may be positioned within the nacelle cavity 64. The flow of gas through the struts 72 may further provide cooling for the struts 72 and for the inner exhaust case 70. The additional cooling provided by the struts 72 of the present disclosure may facilitate material selections for components of the exhaust system 32 which may weight, cost, strength, durability, etc. characteristics of the exhaust system 32 components. The improved purge flow through the nacelle cavity 64 provided by the struts 72 may prevent or substantially prevent the accumulation of airborne contaminants in the nacelle cavity 64 from reaching contaminant thresholds which may be detrimental to the propulsion assembly 20 and/or nacelle 22.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present invention have been disclosed, it will be apparent to those of ordinary skill in the art that many more embodiments and implementations are possible within the scope of the present disclosure. For example, the present invention as described herein includes several aspects and embodiments that include particular features. Although these particular features may be described individually, it is within the scope of the present invention that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Accordingly, the present invention is not to be restricted except in light of the attached claims.

## Claims

1. A propulsion system (10) comprising:
a propulsion assembly (20) having an axial centerline (46), the propulsion assembly (20) including a turbine section (30), an exhaust section (32), and a core flow path (34) for combustion gas through the turbine section (30) and the exhaust section (32), the exhaust section (32) including:
an outer exhaust case (68) radially outward of the core flow path (34);
an inner exhaust case (70) radially inward of the core flow path (34); and
a plurality of hollow struts (72) connecting the outer exhaust case (68) to the inner exhaust case (70), each hollow strut (72) of the plurality of hollow struts (72) including a strut body (92), an inlet (94), an outlet (96), and an internal passage (98), the strut body (92) extending from the outer exhaust case (68) to the inner exhaust case (70), the internal passage (98) extending through the strut body (92) from the inlet (94) to the outlet (96), the inlet (94) located at the outer exhaust case (68); and
a nacelle (22) surrounding the propulsion assembly (20), the nacelle (22) and the propulsion assembly (20) forming a nacelle cavity (64) radially between the nacelle (22) and the outer exhaust case (68), the inlet (94) in fluid communication with the nacelle cavity (64),
**characterized in that**,
the nacelle (22) includes an air inlet (24; 66) extending between a radial exterior of the nacelle (22) and the nacelle cavity (64), and the nacelle cavity (64) is configured such that all air entering the air inlet (24; 66) passes through the plurality of hollow struts (72).

2. The propulsion system (10) of claim 1, wherein the propulsion system (10) is configured as a turboprop gas turbine engine.

3. The propulsion system (10) of claim 1 or 2, wherein the nacelle cavity (64) is located radially outside of the propulsion assembly (20).

4. The propulsion system (10) of claim 1, 2 or 3, wherein the plurality of hollow struts (72) are located downstream of the turbine section (30) with respect to the core flow path (34).

5. The propulsion system (10) of any preceding claim, wherein the propulsion assembly (20) further includes an auxiliary assembly extending through the internal passage (98) of at least one hollow strut (72) of the plurality of hollow struts (72),

6. The propulsion system (10) of claim 5, wherein the auxiliary assembly is a bearing (112) system, the bearing (112) system including a lubricant conduit (114) extending through the internal passage (98) of the at least one hollow strut (72) of the plurality of hollow struts (72).

7. The propulsion system (10) of any preceding claim, wherein the inner exhaust case (70) forms a centerbody (88).

8. The propulsion system of claim 7, wherein the centerbody (88) includes an opening (90) at a downstream end of the centerbody (88).

9. The propulsion system of any preceding claim, wherein:
the inner exhaust case (70) forms an inner cavity, the inner cavity located radially inward of the inner exhaust case (70); and
the outlet (96) is located at an inner radial end (102) of the strut (72).

10. The propulsion system of any preceding claim, wherein the outlet (96) includes a plurality of outlet apertures (84; 118), the plurality of outlet apertures (84; 118) located in the strut body (92) between an outer radial end (100) of the strut (72) and an or the inner radial end (102) of the strut (72).

11. The propulsion system of claim 10, wherein:
the strut body (92) extends between a leading edge (104) and a trailing edge (106); and
the plurality of outlet apertures (84; 118) are located at the trailing edge (106).

## Patentansprüche

1. Antriebssystem (10), umfassend:
eine Antriebsbaugruppe (20), die eine axiale Mittellinie (46) aufweist, wobei die Antriebsbaugruppe (20) einen Turbinenabschnitt (30), einen Abgasabschnitt (32) und einen Kernströmungsweg (34) für Verbrennungsgas durch den Turbinenabschnitt (30) und den Abgasabschnitt (32) beinhaltet, wobei der Abgasabschnitt (32) beinhaltet:
ein außen zu dem Kernströmungsweg (34) radial angeordnetes Abgasgehäuse (68);
ein radial innen zum Kernströmungsweg (34) angeordnetes Abgasgehäuse (70); und
eine Vielzahl von Hohlstreben (72), die das außen liegende Abgasgehäuse (68) mit dem innen liegenden Abgasgehäuse (70) verbinden, wobei jede Hohlstrebe (72) der Vielzahl von Hohlstreben (72) einen Strebenkörper (92), einen Einlass (94), einen Auslass (96) und einen innen liegenden Durchgang (98) beinhaltet, wobei sich der Strebenkörper (92) von dem außen liegenden Abgasgehäuse (68) zu dem innen liegenden Abgasgehäuse (70) erstreckt, wobei sich der innen liegende Durchgang (98) durch den Strebenkörper (92) von dem Einlass (94) zu dem Auslass (96) erstreckt, wobei sich der Einlass (94) an dem außen liegenden Abgasgehäuse (68) befindet; und
eine Gondel (22), die die Antriebsbaugruppe (20) umgibt, wobei die Gondel (22) und die Antriebsbaugruppe (20) eine Gondelhöhle (64) radial zwischen der Gondel (22) und dem außen liegenden Abgasgehäuse (68) bilden, wobei der Einlass (94) in Fluidverbindung mit der Gondelhöhle (64) steht,
**dadurch gekennzeichnet, dass** die Gondel (22) einen Lufteinlass (24; 66) beinhaltet, der sich zwischen einer radialen Außenseite der Gondel (22) und der Gondelhöhle (64) erstreckt, und die Gondelhöhle (64) derart konfiguriert ist, dass die gesamte Luft, die in den Lufteinlass (24; 66) eintritt, die Vielzahl von Hohlstreben (72) passiert.

2. Antriebssystem (10) nach Anspruch 1, wobei das Antriebssystem (10) als ein Turboprop-Gasturbinentriebwerk konfiguriert ist.

3. Antriebssystem (10) nach Anspruch 1 oder 2, wobei sich die Gondelhöhle (64) radial außerhalb der Antriebsbaugruppe (20) befindet.

4. Antriebssystem (10) nach Anspruch 1, 2 oder 3, wobei sich die Vielzahl von Hohlstreben (72) in Bezug auf den Kernströmungsweg (34) stromabwärts des Turbinenabschnitts (30) befindet.

5. Antriebssystem (10) nach einem der vorhergehenden Ansprüche, wobei die Antriebsbaugruppe (20) ferner eine Hilfsbaugruppe beinhaltet, die sich durch den inneren Durchgang (98) wenigstens einer Hohlstrebe (72) der Vielzahl von Hohlstreben (72) erstreckt.

6. Antriebssystem (10) nach Anspruch 5, wobei die Hilfsbaugruppe ein Lagersystem (112) ist, wobei das Lagersystem (112) eine Schmiermittelleitung (114) beinhaltet, die sich durch den inneren Durchgang (98) der wenigstens einen Hohlstrebe (72) der Vielzahl von Hohlstreben (72) erstreckt.

7. Antriebssystem (10) nach einem der vorhergehenden Ansprüche, wobei das innen liegende Abgasgehäuse (70) einen Mittelkörper (88) bildet.

8. Antriebssystem nach Anspruch 7, wobei der Mittelkörper (88) eine Öffnung (90) an einem stromabwärtigen Ende des Mittelkörpers (88) beinhaltet.

9. Antriebssystem nach einem der vorhergehenden Ansprüche, wobei:
das innen liegende Abgasgehäuse (70) eine innen liegende Höhle bildet, wobei sich die innen liegende Höhle radial innerhalb des innen liegenden Abgasgehäuses (70) befindet; und
der Auslass (96) sich an einem radial innen liegenden Ende (102) der Strebe (72) befindet.

10. Antriebssystem nach einem der vorhergehenden Ansprüche, wobei der Auslass (96) eine Vielzahl von Auslassöffnungen (84; 118) beinhaltet, wobei sich die Vielzahl von Auslassöffnungen (84; 118) in dem Strebenkörper (92) zwischen einem radial außen liegenden Ende (100) der Strebe (72) und einem oder dem radial innen liegenden Ende (102) der Strebe (72) befindet.

11. Antriebssystem nach Anspruch 10, wobei:
der Strebenkörper (92) sich zwischen einer Vorderkante (104) und einer Hinterkante (106) erstreckt; und
die Vielzahl von Auslassöffnungen (84; 118) sich an der Hinterkante (106) befindet.

## Revendications

1. Système de propulsion (10) comprenant :
un ensemble de propulsion (20) ayant une ligne centrale axiale (46), l'ensemble de propulsion (20) comportant une section de turbine (30), une section d'échappement (32) et un trajet d'écoulement de noyau (34) pour le gaz de combustion à travers la section de turbine (30) et la section d'échappement (32), la section d'échappement (32) comportant :
un carter d'échappement externe (68) radialement à l'extérieur du trajet d'écoulement de noyau (34) ;
un carter d'échappement interne (70) radialement à l'intérieur du trajet d'écoulement de noyau (34) ; et
une pluralité de mâts creux (72) reliant le carter d'échappement externe (68) au carter d'échappement interne (70), chaque mât creux (72) de la pluralité de mâts creux (72) comportant un corps de mât (92), une entrée (94), une sortie (96) et un passage intérieur (98), le corps de mât (92) se prolongeant du carter d'échappement externe (68) au carter d'échappement interne (70), le passage intérieur (98) se prolongeant à travers le corps de mât (92) de l'entrée (94) à la sortie (96), l'entrée (94) étant située au niveau du carter d'échappement externe (68) ; et
une nacelle (22) entourant l'ensemble de propulsion (20), la nacelle (22) et l'ensemble de propulsion (20) formant une cavité de nacelle (64) radialement entre la nacelle (22) et le carter d'échappement externe (68), l'entrée (94) étant en communication fluidique avec la cavité de nacelle (64),
**caractérisé en ce que** la nacelle (22) comporte une entrée d'air (24 ; 66) se prolongeant entre un extérieur radial de la nacelle (22) et la cavité de nacelle (64), et la cavité de nacelle (64) est configurée de telle sorte que tout l'air entrant dans l'entrée d'air (24 ; 66) passe à travers la pluralité de mâts creux (72).

2. Système de propulsion (10) selon la revendication 1, dans lequel le système de propulsion (10) est configuré comme un moteur à turbine à gaz à turbopropulseur.

3. Système de propulsion (10) selon la revendication 1 ou 2, dans lequel la cavité de nacelle (64) est située radialement à l'extérieur de l'ensemble de propulsion (20).

4. Système de propulsion (10) selon la revendication 1, 2 ou 3, dans lequel la pluralité de mâts creux (72) sont situées en aval de la section de turbine (30) par rapport au trajet d'écoulement de noyau (34).

5. Système de propulsion (10) selon une quelconque revendication précédente, dans lequel l'ensemble de propulsion (20) comporte également un ensemble auxiliaire se prolongeant à travers le passage intérieur (98) d'au moins un mât creux (72) de la pluralité de mâts creux (72).

6. Système de propulsion (10) selon la revendication 5, dans lequel l'ensemble auxiliaire est un système de palier (112), le système de palier (112) comportant un conduit de lubrifiant (114) se prolongeant à travers le passage intérieur (98) de l'au moins un mât creux (72) de la pluralité de mâts creux (72).

7. Système de propulsion (10) selon une quelconque revendication précédente, dans lequel le carter d'échappement interne (70) forme un corps central (88).

8. Système de propulsion selon la revendication 7, dans lequel le corps central (88) comporte une ouverture (90) au niveau d'une extrémité aval du corps central (88).

9. Système de propulsion selon une quelconque revendication précédente, dans lequel :
le carter d'échappement interne (70) forme une cavité interne, la cavité interne étant située radialement vers l'intérieur du carter d'échappement interne (70) ; et
la sortie (96) est située au niveau d'une extrémité radiale interne (102) du mât (72).

10. Système de propulsion selon une quelconque revendication précédente, dans lequel la sortie (96) comporte une pluralité d'ouvertures de sortie (84 ; 118), la pluralité d'ouvertures de sortie (84 ; 118) étant situées dans le corps de mât (92) entre une extrémité radiale externe (100) du mât (72) et une extrémité radiale interne (102) du mât (72).

11. Système de propulsion selon la revendication 10, dans lequel :
le corps de mât (92) se prolonge entre un bord d'attaque (104) et un bord de fuite (106) ; et
la pluralité d'ouvertures de sortie (84 ; 118) sont situées au niveau du bord de fuite (106).
